Europäisches Patentamt

(19) European Patent Office

Office européen des brevets

(11) Publication number: **0 249 268**
**B1**

(12) **EUROPEAN PATENT SPECIFICATION**

(45) Date of publication of the patent specification:
21.03.90

(21) Application number: 87200968.3

(22) Date of filing: 21.05.87

(51) Int. Cl.⁴: **B60J 7/08**, B60H 1/26

(54) **Ventilating hatch.**

(30) Priority: 13.06.86 NL 8601530

(43) Date of publication of application:
16.12.87 Bulletin 87/51

(45) Publication of the grant of the patent:
21.03.90 Bulletin 90/12

(84) Designated Contracting States:
DE FR GB IT NL SE

(56) References cited:
EP-A- 0 002 919
DE-A- 1 952 126
DE-A- 2 260 913
GB-A- 927 923
US-A- 4 522 115

(73) Proprietor: **Vermeulen-Hollandia Octrooien II B.V.,
Küppersweg 9-11, NL-2031 EA Haarlem(NL)**

(72) Inventor: **Boots, Robert Theodoor, Saeftinge 97,
NL-2036 GZ Haarlem(NL)**

(74) Representative: **de Vries, Johannes Hendrik Fokke et al,
Octrooibureau Los en Stigter B.V. P.O. Box 20052,
NL-1000 HB Amsterdam(NL)**

ACTORUM AG

# Description

The invention relates to a ventilating hatch for a vehicle, such as a truck, having a roof opening, comprising a stationary frame adapted to be mounted in the roof opening and provided with a passage being closable by a displaceable panel, which is able to be moved from its closed position upwardly at the front and/or rear side thereof, and vice versa.

It is the object of the invention to improve such a ventilating hatch (see e.g. GB-A 927 923) and to provide a ventilating hatch, wherein a very stable connection between the panel and the stationary frame is accomplished.

For this purpose the ventilating hatch according to the invention is characterized in that there is provided an intermediate frame having pivotal connections relatively to the stationary frame and the panel at the rear and front sides of the ventilating hatch respectively.

Use of this intermediate frame permits a very robust structure, and the movements of the panel are obtained by a pivoting movement of the intermediate frame with respect to the stationary frame and/or by a pivoting movement of the panel with respect to the intermediate frame.

Herein it is possible that the intermediate frame is pivotally connected to the stationary frame at a transverse side of the ventilating hatch, and the panel being pivotally connected to the intermediate frame at the opposite transverse side of the ventilating hatch.

A very favourable embodiment of the ventilating hatch according to the invention is characterized in that the intermediate frame is removable, and the panel being adapted to be pivotally mounted to the stationary frame when the intermediate frame is removed.

This embodiment offers a substantial advantage in that both a singular adjustable ventilating hatch and, in combination with the intermediate frame, a multiple adjustable ventilating hatch can be obtained with the same stationary frame and panel.

In this respect it is advantageously, when the pivot joint between the intermediate frame and the stationary frame and the pivot joint between the panel and the intermediate frame are constructed in a similar way.

In this way a conversion from a singular to a multiple adjustable ventilating hatch and the back is possible by means of a very simple action without many adaptations.

The ventilating hatch according to the invention may also be constructed as a removable emergency hatch, wherein it is favourable, when the stationary frame is adapted to be pivotally mounted to the vehicle roof at one side and to be fastened to the vehicle roof by means of a disconnectable connection at the opposite side.

In this way a maximally large emergency exit is provided for in emergency situations.

The invention will hereinafter be elucidated with reference to the drawings, which show an embodiment of the ventilating hatch according to the invention by way of example.

Fig. 1 is a schematical longitudinal sectional view of an embodiment of the multiple adjustable ventilating hatch according to the invention.

Fig. 2-5 are longitudinal sectional views of the ventilating hatch of fig. 1 on a smaller scale and in different positions, wherein, however, the adjusting mechanisms are omitted.

Fig. 6 and 7 are longitudinal sectional views, similar to those of fig. 2-5, of the singular adjustable ventilating hatch according to the invention in different positions.

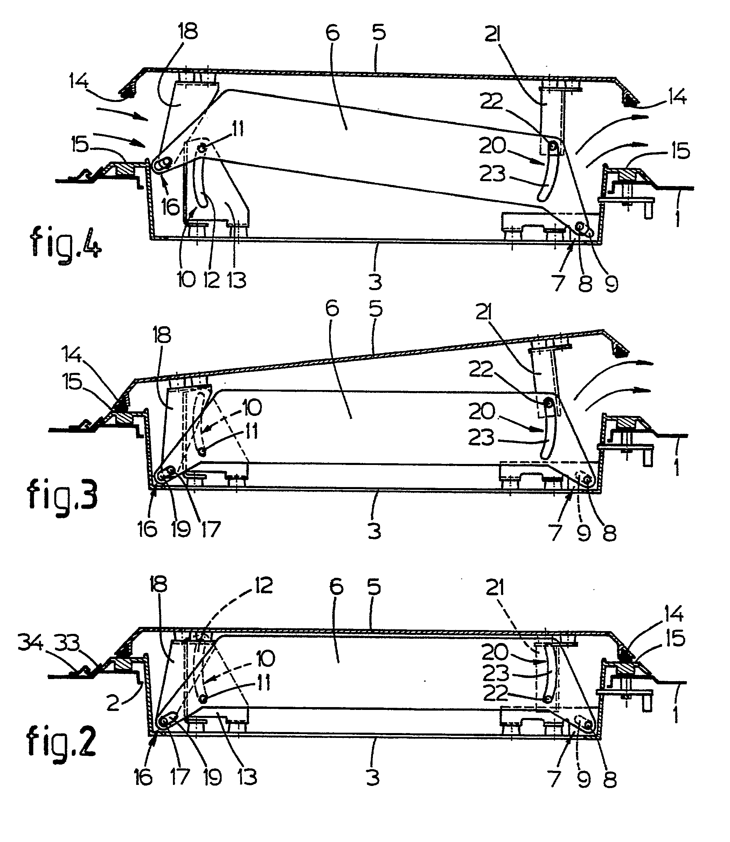

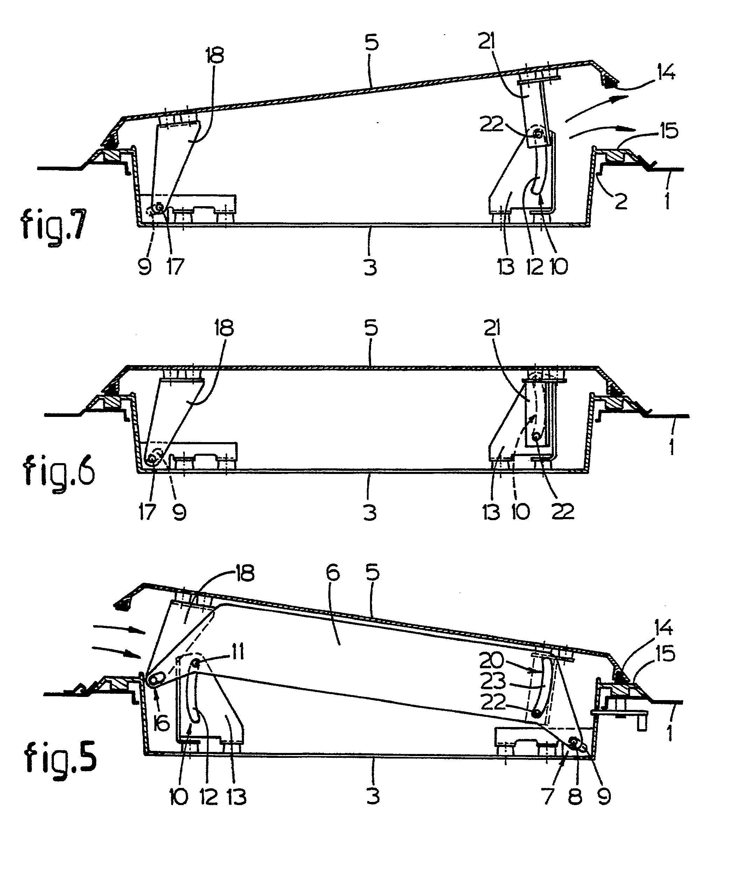

The drawings show an embodiment of a ventilating hatch for a vehicle, such as a truck, of which the fixed roof 1 is provided with an opening 2. The ventilating hatch has a stationary frame 3, which is mounted in the roof opening 2 of the vehicle. The stationary frame 3 comprises a passage 4. The ventilating hatch is further provided with a panel 5, which closes the passage 4 in the stationary frame 3 in its closed position. From this closed position (fig. 2) the panel 5 may selectively be set in a rearwardly and upwardly inclined position (fig. 3), in a forwardly and upwardly inclined position (fig. 5) or in a position (fig. 4), in which the panel is substantially parallel to the stationary frame 3 and is spaced above the passage 4. In this regard it should be noted, that the front side of the vehicle and consequently the front side of the ventilating hatch is at the left side of the drawings.

The ventilating hatch is principally constructed of three main parts, that is the stationary frame 3, the panel 5 and an intermediate frame 6 provided between both former parts. This intermediate frame 6 is pivotally connected to the stationary frame 3 at the rear side of the ventilating hatch, which is indicated by reference numeral 7, and the panel 5 is pivotally connected to the intermediate frame 6 at the front side of the ventilating hatch at 16.

In this way it is possible to bring the panel 5 to a forwardly and upwardly inclined position (fig. 5) by pivoting the intermediate frame 6 upwardly with respect to the stationary frame 3, and the panel 5 is brought to a rearwardly and upwardly inclined position (fig. 3) by pivoting the panel 5 upwardly with respect to the intermediate frame 6. A combination of both pivoting movements brings about that the panel 5 will be positioned with all its sides spaced above the passage 4, and in its extreme position the panel extends substantially parallel to the vehicle roof (fig. 4).

It is noted that in the drawing only one plate extending in the longitudinal direction of the vehicle is shown as a part of the intermediate frame 6. Generally the intermediate frame 6 has two of such plates, one at each longitudinal side of the ventilating hatch, the plates being rigidly connected to each other by transverse connections. The elements of the plate and the elements of panel 5 and the stationary frame 3 cooperating therewith, which will be described in detail hereinafter are normally provided at both longitudinal sides of the ventilating hatch.

The pivot joint 7 between the intermediate frame 6 and the stationary frame 3 consists of a pivot pin 8 provided near the rear side of the intermediate frame 6 and engaging in a slot 9 formed in the stationary frame 3 and inclining forwardly and upwardly from the rear side of the ventilating hatch.

At the front side of the ventilating hatch the stationary frame 3 and the intermediate frame 6 are guided with respect to each other by means of a pin slot assembly 10. A guide pin 11 of this assembly 10 is provided near the front side of the intermediate frame 6, and a guide slot 12 is formed in a support 13 of the stationary frame 3. The guide slot 12 has a configuration of a segment of a circle. The circular guide slot 12 in the support 13 of the stationary frame 3 does not extend concentrically about the pivot joint 7 between the intermediate frame 6 and the stationary frame 3, so that the pivot pin 8 moves forwardly and upwardly (see fig. 5) from its rear position in the slot 9 (see e.g. fig. 2) when the intermediate frame is tilted from its lower position. The inclination of the slot 9 and the path of the guide slot 12 are chosen such, that when the above mentioned tilting movement is effected the imaginary pivot axis of the panel 5 substantially coincide with a seal 14 at the rear side of the panel. This seal 14, which extends along the whole circumference of the panel 5 engages a sealing face 15 formed along the circumference of the stationary frame 3, in the closed position of the panel 5. Because the pivot axis of the panel 5 coincides with the seal 14 at the rear side of the panel 5, this seal 14 will be maintained in engagement with the sealing face 15 during the tilting movement of the panel 5 from and to the closed position, while it is prevented that the seal 14 slides over the sealing face 15.

The pivot joint 16 between the panel 5 and the intermediate frame 6 is formed in a similar way by a pivot pin 17 carried by a support 18 at the lower side of the panel 5 and engaging in a slot 19 formed near the front side of the intermediate frame 6. This slot 19 extends rearwardly and upwardly inclined from the front side of the ventilating hatch.

At the rear side of the ventilating hatch the intermediate frame 6 and the panel 5 are guided with respect to each other by means of a pin-slot assembly 20. A support 21 mounted at the lower side of the panel carries a guide pin 22 of the pin-slot assembly 20, and a guide slot 23 thereof is formed in the intermediate frame 6. The tilting movement of the panel 5 with respect to the intermediate frame 6 takes place in a similar way as the tilting movement of the intermediate frame 6 with respect to the stationary frame 3. As a consequence the seal 14 at the front side of the panel 5 will be in engagement with the cooperating sealing face 15 in each rearwardly and upwardly inclined position, so that it is prevented that air or water will enter the interior of the vehicle at the front side of the panel 5 when the vehicle is driving.

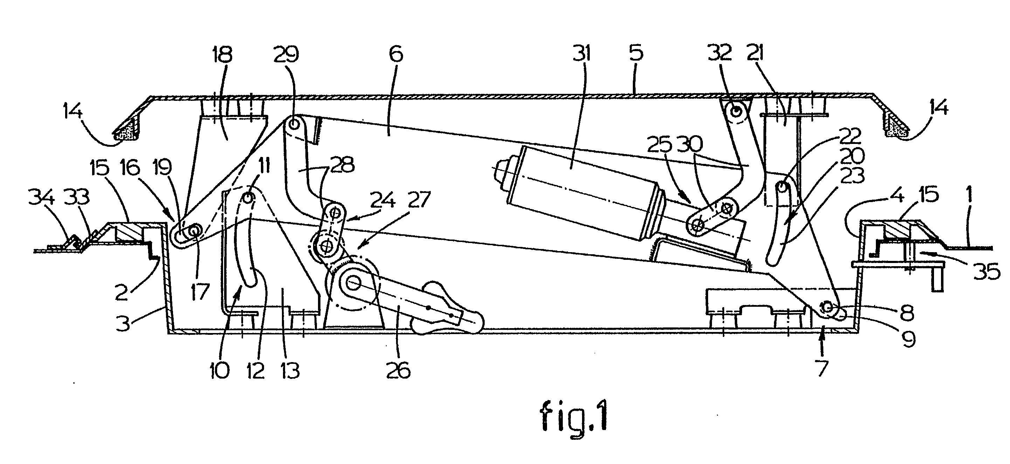

Fig. 1 further shows in a schematic way an adjusting mechanism 24 for adjusting the intermediate frame 6 with respect to the stationary frame 3, and an adjusting mechanism 25 with which the panel 5 is adjustable with respect to the intermediate frame 6. The adjusting mechanism 24 is manually operated and permits only a locking operation in both extreme positions. A lever arrangement 28 is rotated by means of a handle 26 through a gear transmission 27, thereby causing the intermediate frame 6 to tilt about a pivot pin. The lever arrangement engages the intermediate frame 6 at a point 29. The adjusting mechanism 25 comprises a corresponding lever arrangement 30, which is, however, rotated by an electric motor 31 provided on the intermediate frame 6. The lever arrangement 30 is connected to the panel 5 at a point 32.

The ventilating hatch according to the invention is constructed such, that it is possible to convert the multiple adjustable ventilating hatch, shown in the fig. 1-5, into a singular adjustable ventilating hatch as shown in fig. 6 and 7. In this fashion the panel 5 can only be tilted between the closed position (fig. 6) and a rearwardly and upwardly inclined position (fig. 7).

On behalf of this conversion the intermediate frame 6 is removably mounted in the ventilating hatch. When the conversion has to be effected it is only necessary to remove the intermediate frame 6, to turn the stationary frame 3 180° about a vertical axis and to mount the panel 5 to the stationary frame 3. In order to enable this latter the pivot joints 7 and 16 between the stationary frame 3 and the intermediate frame 6, and between the panel 5 and the intermediate frame 6, respectively, are constructed in a similar way. Consequently the pivot pin 17 of the panel 5 is permitted to be fitted in the slot 9 of the stationary frame 3.

Furthermore the pin-slot assemblies 10 and 20 are also constructed in a similar way, so that the guide pin 22 of the panel is able to cooperate with the guide slot 12 in the support 13 of the stationary frame 3. Especially in fig. 2 it can be seen that both pivot joints 7 and 16 and both pin-slot assemblies 10 and 20 are arranged symmetrically with respect to a vertical transverse plane. In the singular adjustable ventilating hatch the adjustment of the panel 5 takes place by means of the adjusting mechanism 24, of which the lever arrangement 28 engages the panel 5 at the pivot point 32.

The ventilating hatch shown in fig. 1-5 is also constructed as a removable emergency hatch for providing an emergency exit in cases of emergency. On behalf thereof a sectional strip 33 is provided along the front transverse side of the stationary frame 3, the sectional strip 33 being able to cooperate with a sectional strip 34 mounted on the fixed roof 1. These sectional strips 33 and 34 together form a fastening means between the stationary frame and the fixed roof 1 at the respective transverse side of the ventilating hatch 1, and in case of emergency these sectional strips 33 and 34 together form a pivot joint, so that, after loosening a removable joint 35 between the stationary frame 3 and fixed roof 1 at the opposite transverse side, the complete ventilating hatch is permitted to be tilted outwardly. In this way the opening 2 in the fixed roof 1 provides an emergency exit which is as large as possible.

## Claims

1. Ventilating hatch for a vehicle, such as a truck, having a roof opening, comprising a stationary frame (3) adapted to be mounted in the roof opening (2) and provided with a passage (4) being closable by a displaceable panel (5), which is adapted to be moved from its closed position upwardly at the front and/or rear side thereof, and vice versa, **characterized** in that there is provided an intermediate frame (6) having pivotal connections (7, 16) relatively to the stationary frame (3) and the panel (5) at the rear and front sides of the ventilating hatch respectively.

2. Ventilating hatch according to claim 1, **characterized** in that the intermediate frame (6) is pivotally connected to the stationary frame (3) at a transverse side of the ventilating hatch, and the panel (5) being pivotally connected to the intermediate frame (6) at the opposite transverse side of the ventilating hatch.

3. Ventilating hatch according to claim 1 or 2, **characterized** in that the intermediate frame (6) is removable, and the panel (5) being adapted to be pivotally mounted to the stationary frame (3) when the intermediate frame (6) is removed.

4. Ventilating hatch according to claim 3, **characterized** in that the pivot joint (7) between the intermediate frame (6) and the stationary frame (3) and the pivot joint (16) between the panel (5) and the intermediate frame are constructed in a similar way.

5. Ventilating hatch according to one of the claims 2-4, **characterized** in that the panel (5) and the intermediate frame (6), and the intermediate frame (6) and the stationary frame (3), respectively are guided with respect to each other by means of similarly constructed pin-slot assemblies (10, 20) near their transverse side positioned oppositely to the respective pivot joint (7, 16).

6. Ventilating hatch according to claim 5, **characterized** in that the panel (5), and the intermediate frame (6), respectively carry transverse pins (17, 22; 8, 11) near both transverse sides of the ventilating hatch, the transverse pins (17, 8) of the panel (S) near one of the transverse sides and of the intermediate frame (6) near the opposite transverse side serving as pivot pins S (17, 8), and the transverse pins (22, 11) of the panel (5) near the other transverse side and of the intermediate frame (6) near the opposite transverse side serve as guide pins (22, 11) for the cooperation with the respective guide slots (23, 12).

7. Ventilating hatch according to claim 6, **characterized** in that the pivot pins (17) of the panel (5), and the pivot pins (8) of the intermediate frame (6), respectively, are each fitted in a slot (19, 9) formed in the intermediate frame (6), and in the stationary frame (3), respectively, and extending inclined upwardly from the respective transverse side of the ventilating hatch.

8. Ventilating hatch according to claim 7, **characterized** in that the guide slots (23, 12) in the intermediate frame (6), and in the stationary frame (3), respectively, are constructed as guide slots having a configuration of a segment of a circle.

9. Ventilating hatch according to claim 7 or 8, wherein between the panel (5) and the stationary frame (3) a seal (14) is provided, which extends along the whole circumference of the panel (5), characterized in that the slot (19, 9) formed in the intermediate frame (6), and in the stationary frame (3), respectively, and extending inclined upwardly from the respective transverse side of the ventilating hatch is arranged at such an inclination, and the respective oppositely disposed guide slot (23, 12) extends in such a way with respect to the inclined upwardly extending slot (19, 9), that the imaginary pivot axis of the panel (5) substantially coincide with the seal (14) at the respective transverse side of the panel (5) when the panel (5), or the intermediate frame (6), respectively, is tilted.

10. Ventilating hatch according to one of the preceding claims, **characterized** in that a driven adjusting mechanism (24, 25) is provided both between the stationary frame (3) and the intermediate frame (6), and between the intermediate frame (6) and the stationary frame (9).

11. Ventilating hatch according to claim 10, **characterized** in that the adjusting mechanism (24) provided between the stationary frame (3) and the intermediate frame (6) engages onto the panel (5) when the intermediate frame (6) is removed.

12. Ventilating hatch according to claim 10 or 11, **characterized** in that the adjusting mechanism (25) which causes the rear side of the panel (5) to move upwardly and downwardly, is adapted to be locked in any position.

13. Ventilating hatch according to claim 12, **characterized** in that the adjusting mechanism (25) which is adapted to be locked in any position, is driven electrically by an electric motor (31).

14. Ventilating hatch according to one of the claims 10-13, **characterized** in that each adjusting mechanism (24, 25) consists of a lever arrangement (28, 30).

15. Ventilating hatch according to one of the preceding claims, which is constructed as a removable emergency hatch, **characterized** in that the stationary frame (3) is adapted to be pivotally mounted to the vehicle roof (1) by a pivotal connection (33, 34) at one side and to be fastened to the vehicle roof (1) by means of a disconnectable connection (35) at the opposite side.

**Patentansprüche**

1. Lüftungsluke für ein eine Dachöffnung (2) aufweisendes Fahrzeug, wie etwa einen Lastwagen, mit einem stationären Rahmen (3), der für eine Montage in der Dachöffnung (2) ausgebildet und mit einer Öffnung (4) versehen ist, die mittels einer versetzbaren Platte (5) verschließbar ist, welche ausgebildet ist, an ihrem vorderen und/oder hinteren Ende aus ihrer Schließstellung heraus aufwärts bewegt zu werden und umgekehrt, dadurch gekennzeichnet, daß ein Zwischenrahmen (6) vorhanden ist, der am vorderen und hinteren Ende der Lüftungsluke drehbewegliche Verbindungen (7, 16) bezüglich des stationären Rahmens (3) bzw. der Platte (5) aufweist.

2. Lüftungsluke nach Anspruch 1, dadurch gekennzeichnet, daß der Zwischenrahmen (6) an einer Querseite der Lüftungsluke drehbeweglich mit dem stationären Rahmen (3) verbunden ist und die Platte (5) an der gegenüberliegenden Querseite der Lüftungsluke drehbeweglich mit dem Zwischenrahmen (6) verbunden ist.

3. Lüftungsluke nach Anspruch 1 oder 2, dadurch gekennzeichnet, daß der Zwischenrahmen (6) entfernbar ist und die Platte (5) ausgebildet ist, drehbeweglich am stationären Rahmen (3) befestigt zu werden, wenn der Zwischenrahmen (6) entfernt ist.

4. Lüftungsluke nach Anspruch 3, dadurch gekennzeichnet, daß das Drehgelenk (7) zwischen dem Zwischenrahmen (6) und dem stationären Rahmen (3) sowie das Drehgelenk (16) zwischen der Platte (5) und dem Zwischenrahmen (6) ähnlich gebaut sind.

5. Lüftungsluke nach einem der Ansprüche 2 bis 4, dadurch gekennzeichnet, daß die Platte (5) bezüglich des Zwischenrahmens (6) bzw. der Zwischenrahmen (6) bezüglich des stationären Rahmens (3) gegenseitig jeweils mittels ähnlich gebauter Zapfen-Schlitz-Anordnungen (10, 20) geführt sind, die in der Nähe der Querseiten und gegenüber dem jeweiligen Drehgelenk (7, 16) angeordnet sind.

6. Lüftungsluke nach Anspruch 5, dadurch gekennzeichnet, daß die Platte (5) bzw. der Zwischenrahmen (6) in der Nähe beider Querseiten der Lüftungsluke Querzapfen (17, 22; 8, 11) tragen, wobei die Querzapfen (17, 8) der Platte (5) nahe einer der Querseiten und des Zwischenrahmens (6) nahe der gegenüberliegenden Querseite als Drehzapfen (17, 8) dienen und die Querzapfen (22, 11) der Platte (5) nahe der anderen Querseite und des Zwischenrahmens (6) nahe der gegenüberliegenden Querseite als Führungszapfen (22, 11) für das Zusammenwirken mit den jeweiligen Führungsschlitzen (23, 12) dienen.

7. Lüftungsluke nach Anspruch 6, dadurch gekennzeichnet, daß die Drehzapfen (17) der Platte (5) bzw. die Drehzapfen (8) des Zwischenrahmens (6) jeweils in einen Schlitz (19, 9) eingepaßt sind, der im Zwischenrahmen (6) bzw. im stationären Rahmen (3) ausgebildet ist und sich von der jeweiligen Querseite der Lüftungsluke unter einer Neigung aufwärts erstreckt.

8. Lüftungsluke nach Anspruch 7, dadurch gekennzeichnet, daß die Führungsschlitze (23, 12) im Zwischenrahmen (6) bzw. im stationären Rahmen (3) als Führungsschlitze ausgebildet sind, die eine Konfiguration eines Kreisabschnitts aufweisen.

9. Lüftungsluke nach Anspruch 7 oder 8, wobei zwischen der Platte (5) und dem stationären Rahmen (3) eine Dichtung (14) vorhanden ist, die sich entlang des gesamten Umfangs der Platte (5) erstreckt, dadurch gekennzeichnet, daß der Schlitz (19, 9), der im Zwischenrahmen (6) bzw. im stationären Rahmen (3) ausgebildet ist und sich von der jeweiligen Querseite der Lüftungsluke unter einer Neigung aufwärts erstreckt, unter einer solchen Neigung angeordnet ist und der jeweilige gegenüberliegend angeordnete Führungsschlitz (23, 12) sich bezüglich des geneigt aufwärts erstreckenden Schlitzes (19, 9) solcherart erstreckt, daß die gedachte Drehachse der Platte (5) an der jeweiligen Querseite der Platte (5) im wesentlichen mit der Dichtung (14) zusammenfällt, wenn die Platte (5) bzw. der Zwischenrahmen (6) gekippt wird.

10. Lüftungsluke nach einem der vorhergehenden Ansprüche, dadurch gekennzeichnet, daß ein angetriebener Anpassungsmechanismus (24, 25) sowohl zwischen dem stationären Rahmen (3) und dem Zwischenrahmen (6) als auch zwischen dem Zwischenrahmen (6) und dem stationären Rahmen (3) vorhanden ist.

11. Lüftungsluke nach Anspruch 10, dadurch gekennzeichnet, daß der zwischen dem stationären Rahmen (3) und dem Zwischenrahmen (6) vorhandene Anpassungsmechanismus (24) auf die Platte (5) wirkt, wenn der Zwischenrahmen (6) entfernt ist.

12. Lüftungsluke nach Anspruch 10 oder 11, dadurch gekennzeichnet, daß der Anpassungsmechanismus (25), der das hintere Ende der Platte (5) zu einer Auf- oder Abwärtsbewegung veranlaßt, ausgebildet ist, in beliebiger Stellung festgestellt zu werden.

13. Lüftungsluke nach Anspruch 12, dadurch gekennzeichnet, daß der Anpassungsmechanismus (25), der ausgebildet ist, in beliebiger Stellung festgestellt zu werden, mittels eines Elektromotors (31) elektrisch angetrieben ist.

14. Lüftungsluke nach einem der Ansprüche 10 bis 13, dadurch gekennzeichnet, daß jeder Anpassungsmechanismus (24, 25) aus einer Hebelanordnung (28, 30) besteht.

15. Lüftungsluke nach einem der vorhergehenden Ansprüche, welche als entfernbare Notluke ausgestaltet ist, dadurch gekennzeichnet, daß der stationäre Rahmen (3) ausgebildet ist, an einer Seite mittels einer Drehverbindung (33, 34) drehbeweglich am Fahrzeugdach (1) montiert zu werden und an der gegenüberliegenden Seite mittels einer lösbaren Verbindung (35) am Fahrzeugdach (1) befestigt zu werden.

## Revendications

1. Trappe d'aération pour un véhicule, tel qu'un camion, présentant une ouverture (2) de toit, comprenant un bâti fixe (3) conçu pour être monté dans l'ouverture (2) du toit et délimitant un passage (4) pouvant être fermé par un panneau mobile (5), qui est conçu pour être déplacé de sa position fermée vers le haut, sur son côté avant et/ou arrière, et vice versa, caractérisée en ce qu'il est prévu un bâti intermédiaire (6) comportant des articulations pivotantes (7, 16) par rapport au bâti fixe (3) et au panneau (5) sur les côtés arrière et avant de la trappe d'aération, respectivement.

2. Trappe d'aération selon la revendication 1, caractérisée en ce que le bâti intermédiaire (6) est articulé sur le bâti fixe (3) à un côté transversal de la trappe d'aération, et le panneau (5) est articulé sur le bâti intermédiaire (6) au côté transversal opposé de la trappe d'aération.

3. Trappe d'aération selon la revendication 1 ou 2, caractérisée en ce que le bâti intermédiaire (6) est amovible, le panneau (5) étant conçu pour être monté de façon pivotante sur le bâti fixe (3) lorsque le bâti intermédiaire (6) est enlevé.

4. Trappe d'aération selon la revendication 3, caractérisée en ce que l'articulation à pivot (7) entre le bâti intermédiaire (6) et le bâti fixe (3) et l'articulation à pivot (16) entre le panneau (5) et le bâti intermédiaire (6) sont réalisées d'une manière similaire.

5. Trappe d'aération selon l'une des revendications 2–4, caractérisée en ce que le panneau (5) et le bâti intermédiaire (6), et le bâti intermédiaire (6) et le bâti fixe (3), respectivement, sont guidés l'un par rapport à l'autre au moyen d'ensembles (10, 20) à axes-fentes de réalisation similaire, à proximité de leur côté transversal opposé à l'articulation à pivot respective (7, 16).

6. Trappe d'aération selon la revendication 5, caractérisée en ce que le panneau (5) et le bâti intermédiaire (6) portent, respectivement, des axes transversaux (17, 22; 8, 11) proches des deux côtés transversaux de la trappe d'aération, les axes transversaux (17, 8) du panneau (5), à proximité de l'un des côtés transversaux et du bâti intermédiaire (6), à proximité du côté transversal opposé, servant d'axes de pivot (17, 8), et les axes transversaux (22, 11) du panneau (5), à proximité de l'autre côté transversal et du bâti intermédiaire (6), à proximité du côté transversal opposé, servant d'axes (22, 11) de guidage pour la coopération avec les fentes de guidage respectives (23, 12).

7. Trappe d'aération selon la revendication 6, caractérisée en ce que les axes de pivot (17) du panneau (5) et les axes de pivot (8) du bâti intermédiaire (6), respectivement, sont logés chacun dans une fente (19, 9) formée dans le bâti intermédiaire (6) et dans le bâti fixe (3), respectivement, et inclinée vers le haut à partir du côté transversal respectif de la trappe d'aération.

8. Trappe d'aération selon la revendication 7, caractérisée en ce que les fentes de guidage (23, 12) du bâti intermédiaire (6) et du bâti fixe (3), respectivement, sont réalisées en tant que fentes de guidage ayant une configuration de segment de cercle.

9. Trappe d'aération selon la revendication 7 ou 8, dans laquelle, entre le panneau (5) et le bâti fixe (3), est prévu un joint d'étanchéité (14) qui s'étend sur toute la circonférence du panneau (5), caractérisée en ce que la fente (19, 9) formée dans le bâti intermédiaire (6) et dans le bâti fixe (3), respectivement, et inclinée vers le haut à partir du côté transversal respectif de la trappe de ventilation, est agencée sous une inclinaison telle, et la fente de guidage (23, 12), disposée, respectivement, en opposition, s'étend d'une manière telle, par rapport à la fente (19, 9) inclinée vers le haut, que l'axe imaginaire de pivotement du panneau (5) coïncide sensiblement avec le joint d'étanchéité (24) au côté transversal respectif du panneau (5) lorsque le panneau (5), ou le bâti intermédiaire (6), respectivement, est incliné.

10. Trappe d'aération selon l'une des revendications précédentes, caractérisée en ce qu'un mécanisme commandé (24, 25) de réglage est prévu à la fois entre le bâti fixe (3) et le bâti intermédiaire (6), et entre le bâti intermédiaire (6) et le bâti fixe (9).

11. Trappe d'aération selon la revendication 10, caractérisée en ce que le mécanisme (24) de réglage prévu entre le bâti fixe (3) et le bâti intermédiaire (6) porte sur le panneau (5) lorsque le bâti intermédiaire (6) est enlevé.

12. Trappe d'aération selon la revendication 10 ou 11, caractérisée en ce que le mécanisme de réglage (25), qui fait monter et descendre le côté arrière du panneau (5), est conçu pour être bloqué dans une position quelconque.

13. Trappe d'aération selon la revendication 12, caractérisée en ce que le mécanisme de réglage (25), qui est conçu pour être bloqué dans une position quelconque, est commandé électriquement par un moteur électrique (31).

14. Trappe d'aération selon l'une des revendications 10–13, caractérisée en ce que chacun des mécanismes de réglage (24, 25) est constitué d'un agencement de leviers (28, 30).

15. Trappe d'aération selon l'une des revendications précédentes, qui est construite sous la forme d'une trappe amovible de secours, caractérisée en ce que le bâti fixe (3) est conçu pour être monté de façon pivotante sur le toit (1) d'un véhicule par une articulation pivotante (33, 34) sur un côté et pour être fixé au toit (1) du véhicule au moyen d'une liaison (35) pouvant être rompue, sur le côté opposé.

fig.1

fig.4

fig.3

fig.2

fig.7

fig.6

fig.5